# FASCICULE DE BREVET EUROPEEN

(11) **EP 1 486 995 B1**
(45) Date de publication et mention de la délivrance du brevet: **02.01.2008**
(21) Numéro de dépôt: 04291381.4
(22) Date de dépôt: 03.06.2004
(51) Int. Cl.: H01F 41/02, G01P 3/487

(54) **Procédé de fabrication d'un dispositif de codage magnétique**
Herstellungsverfahren einer magnetischen Kodierungsanordnung
Method for manufacturing a magnetic encoding device

(30) Priorité: 10.06.2003 FR 0306915
(43) Date de publication de la demande: 15.12.2004
(73) Titulaire: HUTCHINSON, 75008 Paris (FR)
(72) Inventeur: Sautier, Pascal, 45200 Paucourt (FR); Argy, Gilles, 78940 La Queue les Yvelines (FR)
(74) Mandataire: Bolinches, Michel Jean-Marie

(56) Documents cités:
- EP-A- 1 184 668
- EP-A- 1 291 660
- WO-A-02/103296
- US-A- 5 145 614

## Description

L'invention concerne un procédé de fabrication d'un dispositif de codage magnétique, en particulier d'un joint codeur angulaire notamment utilisé pour des applications de mesures de vitesses angulaires dans l'industrie automobile par exemple.

Dans le document EP-A-1 291 660, on décrit un dispositif de codage magnétique dans lequel soit on fixe une pluralité d'aimants sur un support de réception (figures 7 à 9), soit on aimante un élément magnétisable (figure 9), pour obtenir une alternance continue de pôles magnétiques Nord/Sud.

Dans le document EP-A-1 184 668, on décrit un dispositif de codage magnétique dans lequel on mélange du caoutchouc non vulcanisé avec des particules ferromagnétiques, ce mélange est ensuite moulé par vulcanisation, et le mélange moulé est soumis à une aimantation, pour obtenir une alternance continue de pôles magnétiques Nord/Sud.

Dans un autre type de joint codeur angulaire connu à ce jour, des charges ferromagnétiques ou ferrites sont uniformément dispersées dans une matrice élastomère qui est moulée sur un support de réception de forme annulaire par exemple. Ces ferrites sont mécaniquement orientées lors de l'opération de mélangeage avec la matrice élastomère selon leur direction de facile aimantation, mais sans pouvoir migrer dans la matrice. L'orientation mécanique est par exemple obtenue en soumettant la matrice à des opérations de cisaillement. Ensuite, la matrice est moulée et soumise à l'action d'un champ magnétique pour aimanter les ferrites et obtenir ainsi une alternance continue de pôles magnétiques Nord/Sud.

Cette dernière technique de fabrication d'un joint codeur angulaire présente notamment l'inconvénient de pouvoir présenter de grosses ferrites ou amas de ferrite qui, lorsqu'ils sont mal placés, provoquent des défauts de codage magnétique. Par ailleurs, l'orientation mécanique des ferrites qui est suivie de l'opération de moulage de la matrice ne permet pas d'atteindre une amplitude d'aimantation maximum, compte-tenu des valeurs d'aimantation des ferrites et du taux de ferrite dans la matrice, car certaines particules ne sont pas orientées selon leur direction de facile aimantation. Enfin, la densité du codage se limite à 60 paires de pôles pour un joint codeur annulaire ayant un diamètre de l'ordre de 100mm, en particulier pour des joints codeurs montés sur des arbres vilebrequin de véhicules à moteur. Une telle valeur de codage est relativement faible compte-tenu des possibilités de l'électronique qui traitent les signaux du codeur.

Un but de l'invention est de perfectionner cette technique de fabrication d'un dispositif de codage magnétique tant pour améliorer son fonctionnement que d'augmenter la densité de codage possible.

A cet effet, l'invention propose un procédé de fabrication d'un dispositif de codage magnétique pour obtenir une alternance continue de pôles magnétiques Nord/Sud, en particulier pour assurer un positionnement précis et dynamique des soupapes électromagnétiques d'un moteur de véhicule, du type consistant à réaliser un mélange de particules ferromagnétiques ou ferrites dans une matrice, à mouler la matrice et soumettre la matrice moulée à un champ magnétique, procédé caractérisé en ce qu'il consiste à utiliser une matrice ayant une viscosité suffisamment basse pour permettre la migration des particules ferromagnétiques, à disposer de part et d'autre d'une empreinte du moule deux concentrateurs en fer doux et présentant des bossages mutuellement en regard les uns des autres pour canaliser les lignes du champ magnétique, à appliquer le champ magnétique pendant l'opération de moulage en maintenant la matrice à une température donnée pour diminuer sa viscosité et faciliter ainsi la migration et l'orientation selon leur direction de facile aimantation des particules ferromagnétiques et obtenir des formes discontinues à forte concentration en particules, et à refroidir brutalement la matrice alors que le champ magnétique est maintenu pour figer les particules dans la matrice.

A titre d'exemple, la matrice est réalisée en un matériau dont la viscosité, aux températures appropriées, peut être inférieure à 500 Pa.s., ce matériau pouvant être un élastomère ou un thermoplastique élastomère par exemple.

Ainsi, par mise en application du procédé selon l'invention, la migration et l'orientation de particules ferromagnétiques sous l'action d'un champ magnétique qui est contrôlé tant en amplitude qu'en répartition des lignes de champ dans l'espace, dans une matrice à viscosité suffisamment basse pour autoriser la migration des particules ferromagnétiques permet de réaliser des formes géométriques discontinues à forte concentration en particules ferromagnétiques.

On obtient ainsi des zones dépeuplées en particules ferromagnétiques ce qui permet de séparer les pôles et d'éviter des défauts de codage magnétique provoqués par des grosses ou amas de particules, et, par ailleurs, l'orientation des particules ferromagnétiques sous un champ magnétique assure une induction optimale car les particules s'orientent selon leur direction de facile aimantation.

Avantageusement, la matrice est maintenue à une température suffisamment élevée pendant l'application du champ magnétique, de l'ordre de 150° C pour une matrice en un matériau thermoplastique élastomère, pour obtenir une matrice ayant une viscosité suffisamment basse.

L'invention concerne également un dispositif pour la mise en oeuvre du procédé selon l'invention, ce dispositif comprenant notamment deux bobines axialement alignés l'une avec l'autre et montées respectivement de part et d'autre des deux concentrateurs du moule pour produire un champ électromagnétique.

Un dispositif de codage magnétique, en particulier un joint codeur angulaire, peut avoir de nombreuses applications dans le domaine automobile par exemple, en particulier dans les systèmes de freinage ABS et pour contrôler la position des soupapes électromagnétiques des futurs moteurs à combustion interne.

D'autres avantages, caractéristiques et détails de l'invention ressortiront du complément de description qui va suivre en référence à des dessins annexés, donnés uniquement à titre d'exemple et dans lesquels :
- la figure 1 est une vue de face avec arrachement partiel d'une partie d'un joint codeur angulaire selon l'art antérieur ;
- la figure 2 est une vue schématique de principe d'un dispositif de structuration de particules ferromagnétiques pour mettre en oeuvre le procédé selon l'invention ;
- la figure 3 est une vue éclatée d'un moule pour la réalisation d'un dispositif de codage magnétique selon l'invention et qui comprend notamment deux concentrateurs des lignes de champ magnétique ;
- la figure 4 est une vue en perspective partielle agrandie du détail IV de la figure 3 pour illustrer la gravure formée sur chaque concentrateur ; et
- la figure 5 est une demi-vue en coupe partielle à plat du moule de la figure 3 dans une position fermée.

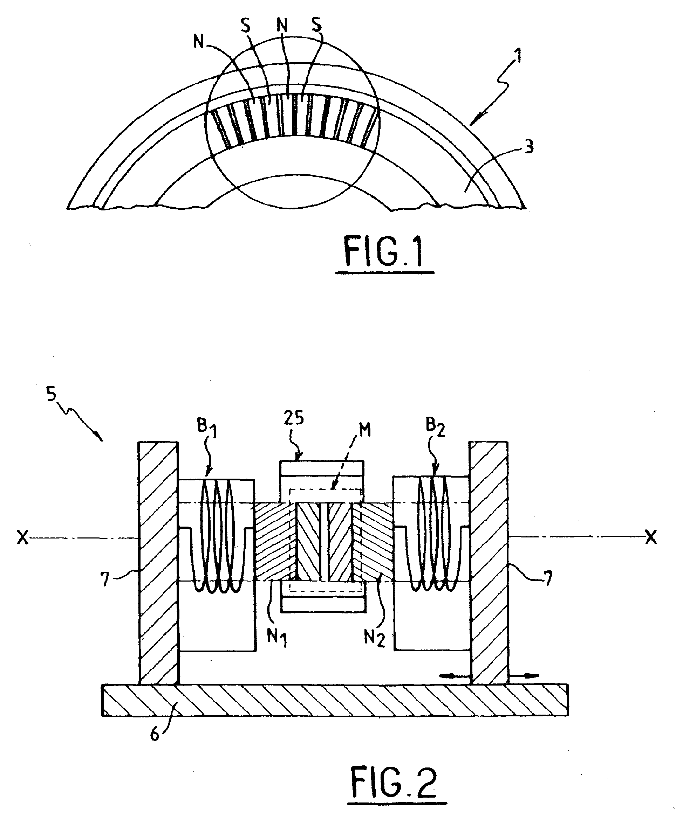

Sur la figure 1, on a représenté une partie d'un dispositif de codage magnétique tel un joint codeur angulaire 1 de forme annulaire qui présente une alternance de pôles Nord/Sud. Ces pôles Nord/Sud ont été obtenus en mélangeant des particules ferromagnétiques dans une matrice élastomère 3, en moulant la matrice et en appliquant ensuite un champ magnétique, un tel procédé selon l'art antérieur présentant les inconvénients énoncés en préambule.

Au contraire, le procédé conforme à l'invention consiste à réaliser un mélange de particules ferromagnétiques dans une matrice en un matériau qui présente une viscosité suffisamment basse, inférieure à 500 Pa.s. par exemple, de manière à ce que les particules puissent migrer dans la matrice d'une part, et s'orienter selon leur direction de facile d'aimantation d'autre part, sous l'action d'un champ magnétique appliqué au cours de l'opération de moulage de la matrice. A titre d'exemple, la matrice peut être réalisée en un matériau élastomère ou un thermoplastique élastomère.

D'une manière générale, au cours de la mise en oeuvre du procédé, on maintient la matrice à une température suffisamment élevée pour diminuer sa viscosité et faciliter la migration et l'orientation des particules, cette température pouvant être de l'ordre de 150° C pour une matrice en un matériau thermoplastique élastomère.
Par ailleurs, à la fin de la mise en oeuvre du procédé, on refroidit brutalement la matrice pour figer les particules alors que le champ magnétique est toujours appliqué.

La mise en oeuvre de ce procédé permet de constituer une alternance de pôles Nord/Sud, c'est-à-dire des formes géométriques à fortes concentration en particules ferromagnétiques qui vont former des pôles qui sont deux à deux séparés par des zones dépeuplées de particules ferromagnétiques.

D'une manière générale, la structuration des particules ferromagnétiques dans la matrice élastomère est réalisée pendant l'opération de moulage au moyen d'un dispositif de structuration 5 schématiquement illustré à la figure 2. Ce dispositif 5 comprend notamment une embase 6 à partir de laquelle s'étendent deux potences verticales 7 dont l'une peut se déplacer le long de l'embase 6 par des moyens de guidage et de fixation appropriés. Les faces en regard des deux potences 7 supportent deux bobines B₁ et B₂ axialement alignées l'une avec l'autre suivant un axe X-X perpendiculaire aux potences 7. A l'intérieur de chaque bobine B₁ et B₂, on place un noyau plein N₁ et N₂ en fer doux par exemple, qui fait saillie au-delà des faces d'extrémité en regard l'une de l'autre des deux bobines B₁ et B₂, et on place un moule M entre les deux faces d'extrémité en regard l'une de l'autre des deux noyaux N₁ et N₂. Le moule M comprend notamment deux concentrateurs en fer doux 10 de lignes du champ électromagnétique produit par les deux bobines B₁ et B₂, ces deux concentrateurs 10 étant disposés perpendiculairement à l'axe X-X des deux bobines B₁ et B₂ qui vont produire un champ de type électromagnétique lorsqu'elles sont alimentées à partir d'une source non représentée.

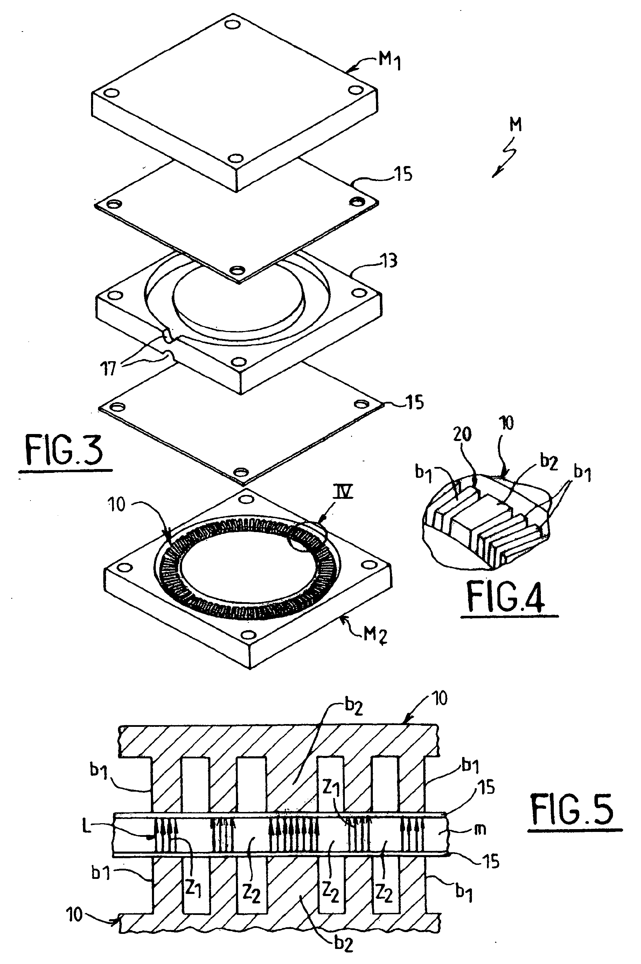

Un exemple de moule M est illustré sous une forme éclatée sur la figure 3, ce moule M comprenant les deux concentrateurs 10 en fer doux par exemple montés dans les deux parties d'extrémité M₁ et M₂ du moule M, entre lesquelles on monte une empreinte 13 de forme annulaire formant la cavité du moule avec interposition d'une feuille 15 conductrice du point de vue magnétique entre l'empreinte 13 et chaque concentrateur 10. Chaque feuille 15 laisse passer les lignes du champ électromagnétique produit par les deux bobines B₁ et B₂, mais forme une barrière étanche pour éviter que le matériau élastomère ou thermoplastique élastomère injecté dans l'empreinte 13 par des ouvertures 17 ne vienne polluer les concentrateurs 10.

Dans le cas où l'on désire mouler un dispositif de codage magnétique sous la forme d'un anneau par exemple, on utilise des concentrateurs 10 sous la forme d'un anneau présentant une gravure 20 formée par un ensemble de bossages b₁ et b₂ par exemple, régulièrement répartis sur un cercle et qui se présentent sous la forme de blocs parallélépipédiques rectangles dont les axes longitudinaux passent par le centre de l'anneau (figure 4). Les bossages b₂ ont des dimensions plus importantes que celles des bossages b₁ pour former des singularités magnétiques qui vont constituer des points de repère angulaire absolus pour l'électronique de traitement, leur nombre étant limité par rapport aux bossages b₁.

Les deux concentrateurs 10 sont identiques et montés de manière à ce que leurs bossages b₁ et b₂ soient mutuellement en regard les uns des autres, comme cela est illustré à la figure 5, pour concentrer les lignes L du champ électromagnétique produit par les deux bobines B₁ et B₂, de manière à faire migrer et orienter suivant leur axe de facile aimantation les particules ferromagnétiques. On obtient ainsi des formes discontinues à forte concentration en particules entre les saillies b1 des deux concentrateurs 10.

Plus précisément, les particules ferromagnétiques contenues dans la matrice 3 vont migrer et s'orienter suivant leur direction de facile aimantation dans les zones de la matrice situées en regard des bossages b₁ pour former une série de zones Z₁ à forte concentration, qui sont séparées par des zones Z₂ dépeuplées de particules. Pour obtenir ce résultat, la matrice 3 est maintenue à une température suffisamment élevée pour diminuer sa viscosité et faciliter la migration et l'orientation des particules, cette température pouvant être de l'ordre de 150° C pour une matrice en matériau thermoplastique élastomère, et on refroidit ensuite brutalement la matrice 3 pour figer les particules suivant les zones Z₁ et Z₂. Le refroidissement de la matrice 3 est par exemple constitué par des moyens 25 situés de part et d'autre du moule M.

A titre d'exemple, pour un joint codeur annulaire d'un diamètre de l'ordre de 100mm, on peut réaliser plusieurs centaines de paires de pôles au lieu de 60 pour un joint codeur selon l'art antérieur, ce nombre dépendant du matériau utilisé pour la matrice 3.

D'une manière générale, le dispositif issu du moulage de l'empreinte 13 est monté rotatif et coopère avec un capteur fixe (non représenté) qui peut être un capteur à effet HALL ou un capteur magnéto-résistif, ce dernier capteur présentant une meilleure sensibilité.

Un dispositif de codage magnétique selon l'invention peut être avantageusement utilisé dans toutes les applications de mesure de vitesses angulaires avec la possibilité d'avoir une information de positionnement angulaire par la présence d'une ou plusieurs singularités magnétiques qui fournissent une ou plusieurs références angulaires.

Parmi les applications envisagées, on peut notamment citer celle de l'industrie automobile pour mesurer la vitesse de rotation des roues dans les systèmes ABS, ou pour la mesure de vitesse et de positionnement sur les arbres de vilebrequin. Par ailleurs, le dispositif de codage magnétique pourra être utilisé dans le développement des moteurs à soupapes électromagnétiques qui nécessiteront un positionnement précis et dynamique des soupapes.

## Revendications

1. Procédé de fabrication d'un dispositif de codage magnétique (1) pour obtenir une alternance continue de pôles magnétiques Nord/Sud, en particulier pour assurer un positionnement précis et dynamique des soupapes électromagnétiques d'un moteur de véhicule, du type consistant à réaliser un mélange de particules ferromagnétiques ou ferrites dans une matrice (3), à mouler la matrice et soumettre la matrice moulée à un champ magnétique, procédé **caractérisé en ce qu'**il consiste à utiliser une matrice ayant une viscosité suffisamment basse pour permettre la migration des particules ferromagnétiques, à disposer de part et d'autre d'une empreinte (13) du moule (M) deux concentrateurs (10) en fer doux et présentant des bossages (b₁ et b₂) mutuellement en regard les uns des autres pour canaliser les lignes (L) du champ magnétique, à appliquer le champ magnétique pendant l'opération de moulage en maintenant la matrice à une température donnée pour diminuer sa viscosité et faciliter ainsi la migration et l'orientation selon leur direction de facile aimantation des particules ferromagnétiques et obtenir des formes discontinues à forte concentration en particules, et à refroidir brutalement la matrice alors que le champ magnétique est maintenu pour figer les particules dans la matrice.

2. Procédé selon la revendication 1, dans lequel on réalise une matrice (3) en un matériau dont la viscosité est inférieure à 500 Pa.s.

3. Procédé selon la revendication 1 ou 2, dans lequel la matrice (3) est réalisée à partir d'un matériau élastomère.

4. Procédé selon la revendication 1 ou 2, dans lequel la matrice (3) est réalisée à partir d'un matériau thermoplastique élastomère.

5. Procédé selon l'une quelconque des revendications précédentes, dans lequel la matrice (3) est maintenue à une température suffisamment élevée, de l'ordre de 150° C pour un matériau thermoplastique élastomère, pour obtenir une matrice ayant une viscosité suffisamment basse.

6. Procédé selon la revendication 1, dans lequel certains bossages (b₂) présentent des formes géométriques différentes des autres bossages (b₁) pour constituer des singularités magnétiques.

7. Dispositif pour la mise en oeuvre du procédé tel que défini par l'une quelconque des revendications précédentes, **caractérisé en ce qu'**il comprend notamment un moule (M) avec une empreinte (13) apte à recevoir une matrice (3) réalisée en un matériau à faible viscosité, deux concentrateurs (10) de lignes de champ magnétique montés de part et d'autre de l'empreinte (13), deux bobines (B₁, B₂) axialement alignées l'une avec l'autre et montées de part et d'autre des deux concentrateurs (10) pour produire un champ électromagnétique, et des moyens de refroidissement (25) de la matrice (3).

## Claims

1. Method of manufacturing a magnetic coding device (1) for obtaining a continuous alternation of North/South magnetic poles, in particular with a view to ensuring a precise and dynamic positioning of electromagnetic valves of a vehicle engine, of the type which involves forming a mixture of ferromagnetic particles or ferrites in a matrix (3), moulding the matrix and subjecting the moulded matrix to a magnetic field, which method is **characterised in that** it consists in using a matrix with a viscosity which is low enough to permit the migration of ferromagnetic particles, disposing two concentrators (10) made from soft iron on either side of an imprint (13) of the mould (M) and having projections (b₁ and b₂) mutually facing one another in order to channel the lines (L) of the magnetic field, applying the magnetic field during the moulding operation whilst maintaining the matrix at a given temperature in order to reduce its viscosity and thus facilitate the migration and orientation of the ferromagnetic particles as a function of their direction in which the ferromagnetic particles readily magnetise and obtaining discontinuous shapes with a high concentration of particles, and suddenly cooling the matrix whilst maintaining the magnetic field in order to set the particles in the matrix.

2. Method as claimed in claim 1, in which a matrix (3) is made from a material with a viscosity of less than 500 Pa.s.

3. Method as claimed in claim 1 or 2, in which the matrix (3) is made from an elastomer material.

4. Method as claimed in claim 1 or 2, in which the matrix (3) is made from a thermoplastic elastomer material.

5. Method as claimed in any one of the preceding claims, in which the matrix (3) is maintained at a sufficiently high temperature for a thermoplastic elastomer material, in the order of 150°C, to obtain a matrix with a sufficiently low viscosity.

6. Method as claimed in claim 1, in which some projections (b₂) have different geometric shapes from the other projections (b₁) so as to constitute magnetic singularities.

7. Device for implementing the method as defined in any one of the preceding claims, **characterised in that** it comprises in particular a mould (M) with an imprint (13) designed to accommodate a matrix (3) made from a material with a low viscosity, two concentrators (10) of magnetic field lines mounted on either side of the imprint (13), two coils (B₁, B₂) axially aligned with one another and mounted on either side of the two concentrators (10) in order to produce an electromagnetic field, and means (25) for cooling the matrix (3).

## Patentansprüche

1. Verfahren zum Herstellen einer Vorrichtung zum magnetischen Kodieren (1), um eine kontinuierliche Alternation der magnetischen Nord- und Südpole zu erhalten, insbesondere, um eine genaue und dynamische Positionierung der elektromagnetischen Ventile eines Fahrzeugmotors sicherzustellen, bestehend aus dem Herstellen einer Mischung ferromagnetischer Partikel oder Ferrite in einer Matrix (3), Gießen der Matrix und Aussetzen der gegossenen Matrix gegenüber einem Magnetfeld, wobei das Verfahren **dadurch gekennzeichnet ist, dass** eine Matrix mit ausreichend geringer Viskosität verwendet wird, um die Migration der ferromagnetischen Partikel zu erlauben, zwei Konzentratoren aus Weicheisen auf beiden Seiten einer Vertiefung (13) der Form (M), die einander gegenüber, zum Kanalisieren der Magnetfeldlinien (L), wechselseitige Vorsprünge (b₁ und b₂) aufweisen, angeordnet werden, ein Magnetfeld während des Durchführens des Giessens angelegt wird, wobei die Matrix zum Verringern ihrer Viskosität bei einer gegebenen Temperatur gehalten wird und auf diese Weise die Migration und die Orientierung der ferromagnetischen Partikel gemäß der Richtung ihrer leichten Magnetisierung zu erleichtern und unterbrochene Formen starker Partikelkonzentration zu erhalten, und im sprunghaften Abkühlen der Matrix während das Magnetfeld zum Erstarren der Partikel in der Matrix aufrecht erhalten wird.

2. Verfahren nach Anspruch 1, bei dem die Matrix (3) aus einem Material hergestellt wird, dessen Viskosität geringer als 500 Pa·s ist.

3. Verfahren nach Anspruch 1 oder 2, bei dem die Matrix (3) aus einem elastomeren Material hergestellt wird.

4. Verfahren nach Anspruch 1 oder 2, bei dem die Matrix (3) aus einem thermoplastischen elastomeren Material hergestellt wird.

5. Verfahren nach einem der vorhergehenden Ansprüche, bei dem die Matrix (3), zum Erhalt einer ausreichend geringen Viskosität bei einer ausreichend hohen Temperatur in der Größenordnung von 150°C für ein thermoplastisches elastomeres Material gehalten wird.

6. Verfahren nach Anspruch 1, bei dem gewisse Vorsprünge (b₂) von den anderen Vorsprüngen (b₁) verschiedene geometrische Formen aufweisen, um magnetische Singularitäten zu bilden.

7. Vorrichtung zum Einsetzen des nach einem der vorhergehenden Ansprüche definierten Verfahrens, **dadurch gekennzeichnet, dass** sie insbesondere eine Form (M) mit einer Vertiefung (13) umfasst, die zur Aufnahme einer aus einem Material mit schwacher Viskosität hergestellten Matrix (3) geeignet ist, zwei auf beiden Seiten der Vertiefung (13) angebrachte Konzentratoren (10) von Magnetfeldlinen, zwei miteinander ausgerichtete und auf beiden Seiten der Konzentratoren (10) angebrachten Spulen (B₁, B₂) zum Erzeugen eines Magnetfelds, und Mitteln zum Abkühlen (25) der Matrix (3).
